# EUROPEAN PATENT SPECIFICATION

(11) **EP 4 655 353 B1**
(45) Date of publication and mention of the grant of the patent: **26.08.2026**
(21) Application number: 24701362.6
(22) Date of filing: 18.01.2024
(51) Int. Cl.: C08L 81/06, C08L 69/00, C08K 5/09, C08L 71/00

(54) **COMPOSITIONS COMPRISING POLYARYLENE(ETHER)SULFONES**
POLYARYLEN(ETHER)SULFONE ENTHALTENDE ZUSAMMENSETZUNGEN
COMPOSITIONS COMPRENANT DES POLYARYLÈNE(ÉTHER)SULFONES

(30) Priority: 26.01.2023 EP 23153437
(43) Date of publication of application: 03.12.2025
(73) Proprietor: BASF SE, 67056 Ludwigshafen am Rhein (DE)
(72) Inventor: WEBER, Martin, 67056 Ludwigshafen am Rhein (DE); JUNGHANS, Carsten, 67056 Ludwigshafen am Rhein (DE); HENNENBERGER, Florian, 67056 Ludwigshafen am Rhein (DE); KIDA, Kazuhiro, Jokohama, 226-0006 (JP); STRAUCH, Joachim, 67056 Ludwigshafen am Rhein (DE)
(74) Representative: BASF IP Association
(86) International application number: PCT/EP2024/051151
(87) International publication number: WO 2024/156587

(56) References cited:
- WO-A1-2011/117085

## Description

The present invention relates to compositions comprising polyarylene(ether)sulfones as well as products made from said compositions.

Polyarylene(ether)sulfones belong to the group of high temperature resistant polymers showing high heat resistance, excellent mechanical performance and inherent flame retardancy (E.M. Koch, H.-M. Walter, Kunststoffe 80 (1990) 1146; E. Döring, Kunststoffe 80, (1990) 1149, N. In-chaurondo-Nehm, Kunststoffe 2008 190). Polyarylene(ether)sulfones are amorphous polymers and are used in automotive lighting to mold reflectors and lamp bezels. In such applications the flow of the used materials is important, as well as the surface quality of the obtained part. Blending with polycarbonate has been suggested to improve the properties of the polyarylether and polycarbonate polymers, respectively. US 3,365,517 is directed to blends of polyarylene ethers and polycarbonates which are reported to have improved resistance to thermal stress and crack resistance. DE 4208341 deals with blends of copolyaryleneethersulfones and polycarbonates having excellent toughness. To improve the resistance against blistering of polyethersulfone/polycarbonate blends, hydroxy-functionalized polyarylene ethers have been suggested in EP0658600.

Furthermore, EP2160440 is directed to the use of stearic acid / stearates in mixtures comprising at least one particular polyethersulfone and at least one particular polysulfone. The corresponding products show improved surface quality.

Document WO 2011/117085 A1 relates to thermoplastic molding compositions comprising the following components: (A) at least one polyarylene ether, (B) at least one hyperbranched polymer selected from hyperbranched polycarbonates and hyperbranched polyesters, (C) optionally at least one fibrous or particulate filler and (D) optionally further additives and/or processing aids, a process for producing said compositions, and to the use thereof.

For applications in the area of particularly automotive parts such as reflectors, there is increasing demand for material having good flow and toughness properties and leading to parts with good surface quality. Thus, the problem underlying the patent application was to address the deficiencies of known polymer materials and to provide compositions with combined advantageous properties like flow characteristics, toughness, and surface quality. This problem was solved by the compositions of the present invention. In particular, the present invention provides a composition comprising
A) 50 to 94 % by weight of at least one polyarylene(ether)sulfone;
B) 5 to 45 % by weight of at least one polycarbonate;
C) 0.15 to 1 % by weight of stearic acid; and
D) 0 to 40 % by weight of at least one additive; wherein the sum of % by weight based on the composition is 100 % by weight

Herein, "at least one" may in general mean one or two or more, such as three or four or five or more, wherein more may mean a plurality or an uncountable. For instance, it may mean one or a mixture of two or more. If used in connection with chemical compounds "at least one" is meant in the sense that one or two or more chemical compounds differing in their chemical constitution, that is chemical nature, are described.

The inventive compositions comprise 50 to 94 % by weight of at least one polyarylene(ether)sulfone (component A)).

Polyarylene(ether)sulfones are generally known to a person skilled in the art. In principle, for component A) a polyarylene(ether)sulfone of any structure is encompassed by the present invention.

It may be preferred that the polyarylene(ether)sulfone is composed of units of the general formula II 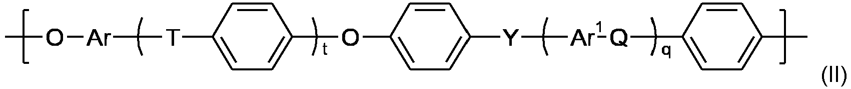 wherein the definitions of the symbols t, q, Q, T, Y, Ar and Ar¹ are as follows:
- t, q: independently of one another 0, 1, 2 or 3;
- Q, T, Y: independently of one another a chemical bond or a group selected from -O-, -S-, -SO₂-, S=O, C=O, -N=N- and -CR^{a}R^{b}-, wherein R^{a} and R^{b} independently of one another are a hydrogen atom, (C₁-C₁₂)alkyl, (C₁-C₁₂)alkoxy, (C₃-C₁₂)cycloalkyl or a (C₆-C₁₈)aryl group, and wherein at least one of Q, T, and Y is present and is -SO₂-; and
- Ar and Ar¹: independently of one another (C₆-C₁₈)arylene.
If Q, T or Y is a chemical bond, this means that the adjacent group on the left-hand side and the adjacent group on the right-hand side are present with direct linkage to one another via a chemical bond.

According to one preferred embodiment, t and q are independently 0 or 1.

According to one preferred embodiment, Q, T, and Y in formula II are independently selected from a chemical bond, -O-, -SO₂- and -CR^{a}R^{b}-, with the proviso that at least one of Q, T, and Y is present and is -SO₂-. Furthermore, it may be preferred, if R^{a} and R^{b} are, independently of one another, hydrogen or (C₁-C₄)alkyl.

In -CR^{a}R^{b}-, R^{a} and R^{b} are preferably independently selected from hydrogen, (C₁-C₁₂)alkyl, (C₁-C₁₂)alkoxy and (C₆-C₁₈)aryl.

(C₁-C₁₂)alkyl refers to linear or branched saturated hydrocarbon groups having from 1 to 12 carbon atoms. The following moieties are particularly encompassed: (C₁-C₆)alkyl, e.g. methyl, ethyl, n-propyl, isopropyl, n-butyl, sec-butyl, 2- or 3-methylpentyl, as well as (C₇-C₁₂)alkyl, e.g. unbranched heptyl, octyl, nonyl, decyl, undecyl, lauryl, and the singly branched or multibranched analogs thereof.

The term " C₁-C₁₂-alkoxy" refers to a linear or branched alkyl group having 1 to 12 carbon atoms which is bonded via an oxygen, at any position in the alkyl group, e.g. methoxy, ethoxy, n-propoxy, 1-methylethoxy, butoxy, 1-methyl¬propoxy, 2-methylpropoxy or 1,1-dimethylethoxy.

(C₃-C₁₂)cycloalkyl refers to monocyclic saturated hydrocarbon radicals having 3 to 12 carbon ring members and particularly comprises (C₃-C₈)cycloalkyl, e.g. cyclopropyl, cyclobutyl, cyclopentyl, cyclohexyl, cycloheptyl, cyclooctyl, cyclopropylmethyl, cyclopropylethyl, cyclopropylpropyl, cyclobutylmethyl, cyclobutylethyl, cyclopentylethyl, -propyl, -butyl, -pentyl, -hexyl, cyclohexylmethyl, -dimethyl, and -trimethyl.

Ar and Ar¹ are independently of one another a (C₆-C₁₈)-arylene group. It may be preferred that, according to a specific embodiment, Ar¹ is an unsubstituted (C₆-C₁₂)arylene group.

It may be preferred that Ar and Ar¹ are independently selected from phenylene, bisphenylene and naphthylene groups, and from arylene groups that derive from anthracene, from phenanthrene, or from naphthacene. For examples, Ar and Ar¹ are independently selected from 1,2-phenylene, 1,3-phenylene, 1,4-phenylene, 1,6-naphthylene, 1,7-naphthylene, 2,6-naphthylene and 2,7-naphthylene, 2,7-dihydroxynaphthylene and 4,4'-bisphenylene.

In particular, it may be preferred that Ar and Ar¹ are independently selected from phenylene and naphthylene groups, such as independently selected from 1,2-phenylene, 1,3-phenylene, 1,4-phenylene, 1,6-naphthylene, 1,7-naphthylene, 2,6-naphthylene and 2,7-naphthylene, more specifically independently selected from 1,4-phenylene, 1,3-phenylene and naphthylene. Furthermore, according to another embodiment of the present invention Ar and Ar¹ are independently selected from arylene groups that derive from anthracene, from phenanthrene, or from naphthacene. According to still a further embodiment, Ar and Ar¹ are independently selected from 2,7-dihydroxynaphthylene and 4,4'-bisphenylene.

It may be preferred if the polyarylene(ether)sulfone according to component A) comprises at least one of the following repeat units IIa to IIo:

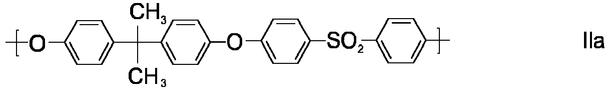

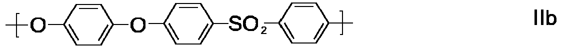

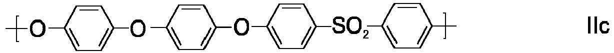

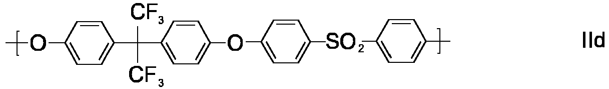

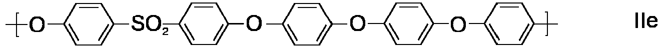

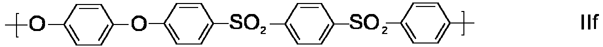

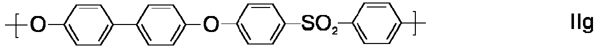

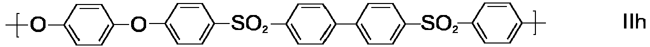

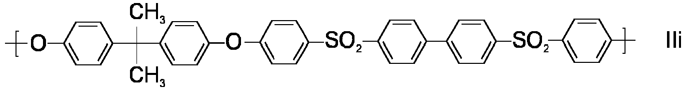

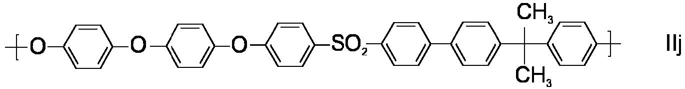

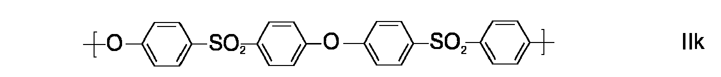

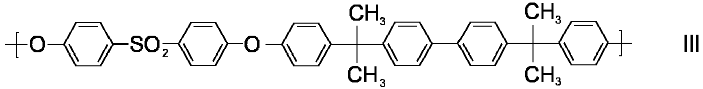

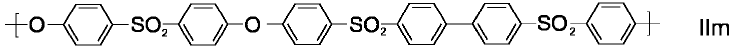

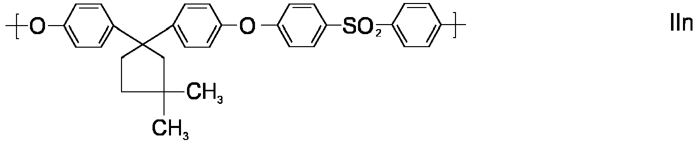

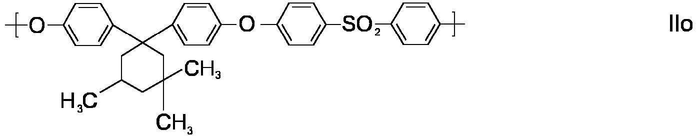

Other repeat units, in addition to the units IIa to IIo that may preferably be present, are those in which one or more 1,4-phenylene units deriving from hydroquinone have been replaced by 1,3-phenylene units deriving from resorcinol, or by naphthylene units deriving from dihydroxynaphthalene.

Units of the general formula II that are particularly preferred are the units Ila, Ilg, and/or Ilk. According to a specific embodiment, it is particularly preferred that the component A) polyarylene(ether)sulfone is in essence composed of one type of unit of the general formula II, whereby said one type may particularly be selected from IIa, Ilg, and Ilk.

According to a preferred embodiment, the component A) polyarylene(ether)sulfone is composed of repeat units where Ar is 1,4-phenylene, t is 1, q is 0, T is a chemical bond, and Y is SO₂. This polyarylene(ether)sulfone is also termed polyphenylene sulfone (PPSU) (formula Ilg).

According to a further preferred embodiment, the component A) polyarylene(ether)sulfone is composed of repeat units where Ar is 1,4-phenylene, t is 1, q is 0, T is C(CH₃)₂, and Y is SO₂. This polyarylene(ether)sulfone is also termed polysulfone (PSU) (formula Ila).

According to still a further preferred embodiment, the component A) polyarylene(ether)sulfone is composed of repeat units where Ar is 1,4-phenylene, t is 1, q is 0, T and Y are SO₂. This polyarylene(ether)sulfone is also termed polyether sulfone (PESU) (formula Ilk).

According to a further preferred embodiment, the inventive composition comprises one polyarylene(ether)sulfone as component A) in the amount or preferred amount as detailed herein. In particular, component A) is one kind of polyarylene(ether)sulfone selected from any of the above-described polymers, in particular selected from the polymers comprising at least one of the repeat units IIa to Ilo.

According to still a further preferred embodiment, the component A) polyarylene(ether)sulfone is PPSU, PSU or PESU.

For the purposes of the present disclosure, abbreviations such as PPSU, PESU, and PSU are in accordance with DIN EN ISO 1043-1:2001.

The amount of component A) present in the inventive composition is 50 to 94 % by weight.

According to a preferred embodiment, the amount of component A) is 50 to 90 % by weight, in particular 50 to 85 % by weight, more specifically 50 to 80% by weight, and even more specifically 50 to 75% by weight of the composition. More specifically, an embodiment uses 50 to 70 % by weight, more specifically 50 to 65 % by weight of component A). According to a very particular embodiment, the amount of component A) is 51 to 94 % by weight. In a further preferred embodiment, the amount of component A) is 52 to 94 % by weight, in particular 53 to 94 % by weight, more specifically 54 to 94% by weight, and even more specifically 55 to 94% by weight of the composition. A very specific embodiment of the invention uses 56 to 94 % by weight, more specifically 57 to 94 % by weight, and even more specifically 58 to 94% by weight of component A). Amounts of 54 to 70 % by weight may be suitable according to a further embodiment.

The weight-average molar masses M_{w} of the polyarylene(ether)sulfones A) of the present invention are preferably from 25 000 to 120 000 g/mol, in particular from 30 000 to 100 000 g/mol, particularly preferably from 32 000 to 90 000 g/mol, determined by means of gel permeation chromatography in dimethylacetamide as solvent against narrowly distributed polymethyl methacrylate as standard.

Production processes that lead to the abovementioned polyarylene(ether)sulfones are known per se to the person skilled in the art and are described by way of example in Herman F. Mark, "Encyclopedia of Polymer Science and Technology", third edition, volume 4, 2003, chapter "Pol-sulfones" pages 2 to 8, and also in Hans R. Kricheldorf, "Aromatic Polyethers" in: Handbook of Polymer Synthesis, second edition, 2005, pages 427 to 443.

The synthesis of the polyarylene(ether)sulfones can generally be done by polycondensation of appropriate monomers in dipolar-aprotic solvents at elevated temperatures (R.N. Johnson et.al., J. Polym. Sci. A-1 5 (1967) 2375, J.E. McGrath et.al., Polymer 25 (1984) 1827). To achieve a preferred V.N., the molecular weight of the polyarylene(ether)sulfone has to be controlled, which can be done, for example, by monitoring the torque level during the condensation, which requires a calibration curve between the torque level in the reaction mixture and a corresponding final product. Furthermore, by using the general knowledge about adjusting the molecular weight by means of using an appropriate stoichiometric ratio between the monomers during polycondensation, the molecular weight can be controlled such that the needed viscosity of the polyarylene(ether) sulfone is achieved (see, for example McGrath et al. Polym. Eng. Sci. 17, 647 (1977)). Also in this case, a correlation between the molecular weight Mₙ and the V.N. has to be established.

Particular preference is given to the reaction, in aprotic polar solvents and in the presence of anhydrous alkali metal carbonate, in particular sodium carbonate, potassium carbonate, calcium carbonate, or a mixture thereof, very particularly preferably potassium carbonate, between at least one aromatic compound having two halogen substituents and at least one aromatic compound having two functional groups reactive toward abovementioned halogen substituents. One particularly suitable combination is N-methyl-2-pyrrolidone as solvent and potassium carbonate as base.

The polyarylene(ether)sulfones as component A) usually have halogen end groups, in particular -Cl, or phenolic OH end groups or phenolate end groups, where the latter can be present as such or in reacted form, in particular in the form of -OCH₃ end groups.

It is preferable that the polyarylene(ether)sulfones A) have at most 0.05% by weight, particularly preferably at most 0.02% by weight, of phenolic end groups, based on the amount by weight of component A).

The respective upper limit for content of phenolic end groups in components A) is a function of the number of end groups available per molecule (this being two in the case of linear polyarylene ethers) and of the number-average chain length. The person skilled in the art is aware of these calculations.

It is preferable that the average number of phenolic end groups per polymer chain in component A) is from 0 to 0.05, in particular from 0 to 0.02, particularly preferably from 0 to 0.01. The content of OH or phenolate endgroups is preferably at most 0.05 wt.%, determined by potentiometric titration.

The proportion of phenolic end groups is preferably determined via potentiometric titration. For this, the polymer is dissolved in dimethylformamide and is titrated with a solution of tetrabutylammonium hydroxide in toluene/methanol. The end point is recorded potentiometrically. The proportion of halogen end groups is preferably determined by means of elemental analysis.

The person skilled in the art can use known methods to determine the average number of phenolic end groups per polymer chain (n^{OH}), on the assumption of strictly linear polymer chains, using the following formula: n^{OH} = m^{OH} [in % by weight]/100 * Mₙ^{P} [in g/mol] * 1/17, starting from the proportion by weight of phenolic end groups, based on the total weight of the polymer (m^{OH}) and from the number-average molecular weight (Mₙ^{P}).

As an alternative, the average number of phenolic end groups per polymer chain (n^{OH}) can be calculated as follows: n^{OH} = 2/(1 + (17/35.45 * m^{Cl}/m^{OH})) on the assumption that the end groups present are exclusively OH groups and Cl groups, and on the assumption of strictly linear polymer chains, if the proportion by weight of Cl end groups (m^{Cl}) is simultaneously known. The person skilled in the art knows how to adapt the calculation methods in the event that end groups other than Cl are present.

As component B) 5 to 45 weight % of at least one polycarbonate is present in the inventive compositions. Polycarbonates are known to the skilled person and can be prepared by known methods. Preferred are polycarbonates that are derived from bisphenols or biphenols. Suitable biphenols or bisphenols are, for example selected from, 2,2-di(4-hydroxyphenyl)propane, 2,4-di(4-hydroxyphenyl)-2- methylbutane, 1,1-di(4-hydroxyphenyl)cyclohexane, 1,1-di(4-hydroxyphenyl)-3,3,5-trimethylcyclohexane, 2,2-di(4-hydroxyphenyl)pentane, 2,6-dihydroxynaphthalene, 4,4'-dihydroxydiphenylsulfone, 4,4'-dihydroxydiphenylether, 4,4'-dihydroxydiphenylsulfite, 4,4'-dihydroxydiphenylmethane, 1,1-di-(4-hydroxyphenyl)ethane and 4,4-dihydroxybiphenyl as well as mixtures of any of said compounds. A preferred example for a bisphenol is 2,2-di(4-hydroxyphenyl)propane, also called bisphenol A.

Either homopolycarbonates or copolycarbonates can be used. According to one embodiment of the present invention, copolycarbonates of bisphenol A and bisphenol A homopolycarbonate are particularly preferred.

Also preferred are polycarbonates on the basis of bisphenol A or bisphenol A and up to 30 mole-% of any one of the aforementioned compounds. Also suitable are copolycarbonates as described in US-A 3,737,409, in particular copolycarbonates on the basis of bisphenol A and di-(3,5-dimethyl-dihydroxyphenyl)sulfone. According to a further preferred embodiment, the polycarbonates are based on bisphenol A with up to 50 mol% 1,1-di(4-hydroxyphenyl)-3,3,5-trimethylcyclohexane.

See also, for example DE-B 13 00 266 and/or DE-A.14 95 730. For polydiorganosiloxane-containing polycarbonates, see DE-A 33 34 782.

The polycarbonate used as component B) may have branching as generally known in the art. For example, branching can be obtained via incorporation of from 0.05 to 2.0 mol %, based on the entirety of the bisphenols used, of at least trifunctional compounds, for example those having three or more than three phenolic OH groups.

Polycarbonates which have proven particularly suitable are those whose Melt Volume Index (MVR) are from 5 to 40 or 6 to 35, in particular from 7 to 30, more specifically from 8 to 27 ml/10 minutes (measured at 300°C/1.2 kg according to ISO 1133). This corresponds to average molecular weights M_{w} (weight-average) of from 10 000 to 200 000, preferably from 20 000 to 80 000 g/mol.

Polycarbonates can be prepared for example by reacting the respective bisphenol or biphenol with phosgene in an interfacial process, or with phosgene in a homogeneous-phase process (known as the pyridine process). Chain terminators can be used to achieve the desired molecular weight. This is generally known to the skilled person. Examples of suitable chain terminators are phenol, p-tert-butylphenol, and long-chain alkylphenols, such as 4-(1,3-tetramethylbutyl)phenol (see for example DE-A 28 42 005). Also monoalkylphenols or dialkylphenols having alkyl substituents with 8 to 20 carbon atoms can be used (see DE-A 35 06 472). Examples are p-nonylphenol, 3,5-di-tert-butylphenol, p-tert-octylphenol, p-dodecylphenol, 2-(3,5-dimethylheptyl)phenol and 4-(3,5-dimethylheptyl)phenol.

In particular, according to the present invention, halogen-free polycarbonates are preferred, such as for example polycarbonates based on biphenols or bisphenols detailed above. For the purposes of the present invention, a halogen-free polycarbonate is a polycarbonate derived from halogen-free bi(s)phenols, halogen-free chain terminators and, where appropriate, from halogen-free branching agents. Minor amounts of hydrolysable chlorine (in the ppm range), may, for example, result from the preparation of the polycarbonates using phosgene. For the purposes of the present invention, polycarbonates of this type with minor amounts (ppm range) of such hydrolysable chlorine are still considered halogen-free polycarbonates.

The amount of component B) present in the inventive composition is 5 to 45 % by weight. According to a preferred embodiment, the amount of component B) is 10 to 45 % by weight, in particular 15 to 45 % by weight, more specifically 20 to 45% by weight, and even more specifically 25 to 45% by weight of the composition. More specifically, an embodiment uses 30 to 45 % by weight, more specifically 35 to 45 % by weight of component B). According to a very particular embodiment, the amount of component B) is 5 to 44 % by weight. In a further preferred embodiment, the amount of component B) is 10 to 43 % by weight, in particular 15 to 42 % by weight, more specifically 20 to 41% by weight, and even more specifically 25 to 40% by weight of the composition.

As component C) 0.15 to 1 weight % of stearic acid is used. Stearic acid is commercially available, for example from KLK Oleo.

According to a preferred embodiment, the amount of component C) is 0.15 to 0.9 % by weight, in particular 0.15 to 0.85 % by weight, more specifically 0.15 to 0.8% by weight, and even more specifically 0.15 to 0.75% by weight of the composition. More specifically, an embodiment uses 0.15 to 0.7 % by weight, more specifically 0.15 to 0.65 % by weight of component C). According to a very particular embodiment, the amount of component C) is 0.15 to 0.6 % by weight. In a further preferred embodiment, the amount of component C) is 0.15 to 0.55 % by weight, in particular 0.15 to 0.5 % by weight. According to a further preferred embodiment, the amount of component C) is 0.2 to 0.9 % by weight, in particular 0.2 to 0.85 % by weight, more specifically 0.2 to 0.8% by weight, and even more specifically 0.2 to 0.75% by weight of the composition. More specifically, an embodiment uses 0.2 to 0.7 % by weight, more specifically 0.2 to 0.65 % by weight of component C). According to a very particular embodiment, the amount of component C) is 0.2 to 0.6 % by weight. In a further preferred embodiment, the amount of component C) is 0.2 to 0.55 % by weight, in particular 0.2 to 0.5 % by weight.

According to the present invention, the compositions may comprise at least one additive D), the additive being different from component A), B) and C) and being present in an amount of 0 to 40 % by weight, in particular from 0 to 30 % by weight, more specifically from 0 to 20 % by weight, even more specifically from 0 to 10 % by weight, for example from 0 to 5 % by weight. In one aspect of the present invention, the inventive compositions comprise at least one additive (component D)) in an amount of more than 0 to 40 wt%, preferably more than 0 to 30 wt %, more specifically more than 0 to 20 wt % of component D). It may be preferred according to this aspect, if component D) is present in an amount of more than 0 to 15 wt%, in particular more than 0 to 10 wt %, more specifically more than 0 to 5 wt %.

If present, it may be preferable that the composition comprises from 0.01 to 20 % by weight, more specifically from 0.1 to 20% by weight of at least one additive D). It may be more preferred if D) is used in amounts of from 0.1 to 15% by weight, such as from 0.1 to 10% by weight. It may be even more preferred that the inventive composition comprises D) from 0.1 to 5 % by weight.

The at least one additive may be selected from for example processing aids, pigments, stabilizers, impact modifiers and flame retardants and may also be a mixture of various additives. Other examples of conventional additives are oxidation retarders, agents to inhibit decomposition caused by heat or by ultraviolet light, lubricants and mold-release agents, dyes and plasticizers, which may be used alone or in any combination with any other additive.

According to one embodiment, the inventive compositions comprise at least one pigment as component D). In addition thereto, the composition may also contain one or more other components D). In one specific embodiment, the inventive composition contains one or more pigments as component D) and no further additives D).

Pigments for the coloring of thermoplastics are well known, see for example R. Gächter and H. Müller, Taschenbuch der Kunststoffadditive [Plastics additives handbook], Carl Hanser Verlag, 1983, pages 494 to 510. A first preferred group of pigments that may be mentioned are white pigments, such as zinc oxide, zinc sulfide, white lead [2PbCO₃·Pb(OH)₂], lithopones, antimony white, and titanium dioxide. The most common crystal forms of titanium dioxide are rutile and anatase, wherein rutile is in particular used for white coloration of the present compositions. Black color pigments which can be used according to the invention are iron oxide black (Fe₃O₄), spinel black [Cu(Cr, Fe)₂O₄], manganese black (a mixture composed of manganese dioxide, silicon dioxide, and iron oxide), cobalt black, and antimony black, and also it may be particularly preferably carbon black, which is mostly used in the form of furnace black or gas black. Suitable carbon black that can be used as component D) is, for example Carbon Black Printex EP, commercially available from Orion Engineered Carbons. In this connection also see G. Benzing, Pigmente für Anstrichmittel [Pigments for paints], Expert-Verlag (1988), pages 78ff.

Particular color shades can for instance be achieved by using inorganic chromatic pigments, such as chromium oxide green, or organic chromatic pigments, such as azo pigments or phthalocyanines. Pigments of this type are known to the person skilled in the art and pigments of this type are widely commercially available.

Pigments and dyes may be present in amounts of up to 5% by weight, such as from 0.05 to 5% by weight, in particular it may be from 0.1 to 5% by weight, preferably from 0.5 to 5% by weight and in particular from 0.1 to 3% by weight or 0.5 to 3% by weight, if present at all. According to one specific embodiment, the inventive compositions comprise at least one pigment in the amount of from 0.05 to 5% by weight, in particular from 0.1 to 5% by weight, preferably from 0.5 to 5% by weight and in particular from 0.1 to 3% by weight or 0.5 to 3% by weight as component D). In addition thereto, the composition may also contain one or more other components D). In one very specific embodiment, the inventive composition does not contain further additives D).

Examples of oxidation retarders and heat stabilizers which can be added to the inventive compositions are halides of metals of group I of the Periodic Table of the Elements, e.g. sodium halides, potassium halides, or lithium halides, examples being chlorides, bromides, or iodides. Zinc fluoride and zinc chloride can also be used. It is also possible to use sterically hindered phenols, hydroquinones, substituted representatives of said group, secondary aromatic amines, if appropriate in combination with phosphorus-containing acids, or to use their salts, or a mixture of said compounds, preferably in concentrations of up to 1% by weight.

Examples of UV stabilizers are various substituted resorcinols, salicylates, benzotriazoles, and benzophenones, the amounts generally used of these being up to 2% by weight.

If present, stabilizers can make up to 2% by weight, preferably from 0.01 to 1 % by weight, in particular from 0.01 to 0.5% by weight.

Other possible additives are nucleating agents, an example being talc powder. Component D) may include one or more impact modifiers, where the impact modifier may be at least one impact modifying rubber. Rubbers are generally crosslinkable polymers which have elastomeric properties at room temperature.

Core-shell graft rubbers is another group of suitable impact-modifies that may be used according to the invention. These are graft rubbers which can be prepared in emulsion and composed of at least one hard and one soft constituent. Usually, a hard constituent is at least one polymer with a glass transition temperature of at least 25° C, and usually a soft constituent is at least one polymer with a glass transition temperature of not more than 0° C. These products generally have a structure made from a core (graft base) and from at least one shell (graft), and the structure is typically a result of the sequence of addition of the monomers. The soft constituent generally derives from butadiene, isoprene, at least one alkyl acrylate, at least one alkyl methacrylate or at least one siloxane and, if desired, at least one other comonomer. Suitable siloxane cores may be prepared, for example, starting from cyclic oligomeric octamethyltetrasiloxane or from tetravinyltetramethyltetrasiloxane. These may, for example, be reacted with y-mercaptopropylmethyldimethoxysilane in a ring-opening cationic polymerization, preferably in the presence of sulfonic acids, to give the soft siloxane core. The at least one siloxane may also be crosslinked by, for example, carrying out the polymerization in the presence of at least one silane having at least one hydrolyzeable group, such as halo or alkoxy, for example tetraethoxysilane, methyltrimethoxysilane or phenyltrimethoxysilane. Examples of suitable at least one comonomer for this are styrene, acrylonitrile and crosslinking or grafting monomers having more than one polymerizable double bond, for example diallyl phthalate, divinylbenzene, butanediol dia-crylate or triallyl (iso) cyanurate. The hard constituent generally derives from styrene, alphamethylstyrene or from copolymers of these, and it may be preferred that the at least one comonomer here is acrylonitrile, methacrylonitrile or methyl methacrylate.

It may be preferred that the at least one core-shell graft rubber comprises a soft core and a hard shell or a hard core, a first soft shell and at least one further hard shell. The incorporation of at least one functional group here, such as carbonyl, carboxylic acid, anhydride, amide, imide, carboxylic ester, amino, hydroxyl, epoxy, oxazoline, urethane, urea, lactam or halobenzyl, may preferably take place by adding at least one suitably functionalized monomer during the polymerization of the final shell.

Examples of suitable functionalized monomers are maleic acid, maleic anhydride, half-esters or diesters, or maleic acid, tert-butyl (meth)acrylate, acrylic acid, glycidyl (meth-)acrylate and vinyloxazoline. The proportion of monomers with functional groups is generally from 0.1 to 25% by weight, whereby it may be preferably from 0.25 to 15% by weight, based on the total weight of the core-shell graft rubber. The weight ratio of soft to hard constituents is generally from 1:9 to 9:1, whereby it may be preferably from 3:7 to 8:2.

Rubbers of this type are known per se or accessible to the person skilled in the art by making use of the general knowledge and are described, for example, in EP-A 208 187.

Thermoplastic polyester elastomers are another group of suitable impact modifiers. For the purposes of the invention, polyester elastomers are segmented copolyether-esters which may comprise long-chain segments generally deriving from poly(alkylene) ether glycols and short-chain segments which may derive from low-molecular weight diols and dicarboxylic acids. Products of this type are known per se or accessible to the person skilled in the art and are described for example in U.S. Pat. No. 3,651.014. Corresponding products are also available commercially as Hytrel^{®} (Du Pont), Arnitel^{®} (Akzo) and Pelprene^{®} (Toyobo Co. Ltd.).

According to one specific embodiment, the inventive compositions do not contain a component D) (0 % by weight).

One specific embodiment of the present invention relates to a composition comprising
A) 50 to 94 % by weight of at least one polyarylene(ether)sulfone;
B) 5 to 45 % by weight of at least one polycarbonate;
C) 0.15 to 1 % by weight of stearic acid; and
D) 0 to 40 % by weight of at least one additive;
wherein the sum of % by weight of components A) to D) is 100 % by weight.

A further embodiment of the present invention relates to a composition comprising
A) 50 to 70 % by weight of at least one polyarylene(ether)sulfone;
B) 25 to 45 % by weight of at least one polycarbonate;
C) 0.15 to 0.8 % by weight of stearic acid; and
D) 0 to 40 % by weight of at least one additive;
wherein the sum of % by weight based on the composition is 100 % by weight.

A further embodiment of the present invention relates to a composition comprising
A) 50 to 70 % by weight of at least one polyarylene(ether)sulfone;
B) 25 to 45 % by weight of at least one polycarbonate;
C) 0.15 to 0.8 % by weight of stearic acid; and
D) 0.1 to 5 % by weight of at least one additive;
wherein the sum of % by weight based on the composition is 100 % by weight.

A further specific embodiment of the present invention relates to a composition consisting of
A) 50 to 94 % or 54 to 70 % by weight of at least one polyarylene(ether)sulfone;
B) 5 to 45 % by weight of at least one polycarbonate;
C) 0.15 to 1 % by weight of stearic acid; and
D) 0 to 40 % by weight of at least one additive;
wherein the sum of % by weight based on the composition is 100 % by weight.

A further embodiment of the present invention relates to a composition consisting of
A) 50 to 70 % or 54 to 70 % by weight of at least one polyarylene(ether)sulfone;
B) 25 to 45 % by weight of at least one polycarbonate;
C) 0.15 to 0.8 % by weight of stearic acid; and
D) 0 to 40 % by weight of at least one additive;
wherein the sum of % by weight based on the composition is 100 % by weight.

Still a further embodiment of the present invention relates to a composition consisting of
A) 50 to 70 % by weight of at least one polyarylene(ether)sulfone;
B) 25 to 45 % by weight of at least one polycarbonate;
C) 0.15 to 0.8 % by weight of stearic acid; and
D) 0.1 to 5 % by weight of at least one additive;
wherein the sum of % by weight based on the composition is 100 % by weight.

Preparation of the compositions can be done by processes known in the art, e.g. extrusion. The components are feed to melt mixing devices like extruders (single- or twin-screw), Brabender-mixers or Banburry-mixers or kneaders, mixed and then extruded. After extrusion the strand is cooled and pelletized to obtain pellets or granules. The order of dosing the individual components into the mixing device can be different, e.g. two or optionally three components can be pre-mixed or all components can be mixed together.

The components of the inventive composition can be mixed in any desired sequence and the order of dosing the individual components into the mixing device can be different, e.g. two or optionally three components can be pre-mixed or all components can be mixed together.

For the product performance a homogeneous mixing is important. To achieve this, generally mixing times from 0.1 to 30 minutes at temperatures of 300 up to 420°C, preferably 310 to 380°C are applied. After compounding the obtained strands are cooled and pelletized.

Surprisingly, the compositions according to the invention show an excellent combination of desired flowability and mechanical properties as well as very good surface quality of pieces made from the inventive compositions. Especially advantageous is, that the desirous properties like tensile elongation and yield strength resulting from the inventive compositions are maintained after aging. These properties make them particularly useful for applications like in the area of car parts such as reflectors, where requirements with respect to flow, toughness and surface quality are increasing and the heat aging behavior is particularly desired.

The inventive composition can advantageously be used for the manufacture of a fiber, film, foam or shaped article, in particular for the manufacture of an automotive part such as a reflector, a lamp bezel and a mirror housing. According to a further aspect, the present invention relates to a fiber, film or shaped article, an automotive part such as a reflector, a lamp bezel and a mirror housing, comprising the composition as described herein.

### Examples

### Production and testing of compounds

Compounding was done using a twin-screw extruder (ZSK 18), the barrel temperatures were set to keep the melt temperature below 370°C. Moulding of the test samples was done at a melt temperature of 340°C and a mold temperature of 120°C.

The notched impact strength of the materials was tested according to ISO 179 1eA at 23°C using ISO-bars.

Tensile testing was done according to ISO 527 (E-Modulus, strength, tensile elongation). For the heat ageing, the samples were stored in oven at 150°C. Then the samples were taken out and stored 24 h at room temperature under dry conditions.

The surface of the samples (molded plates, 60mm*60mm) was evaluated by eye and assessed qualitatively between 1 (very good) and 6 (extremely poor).

The solution viscosity of the polyarylethers was determined using a solution of 0.01g/ml in N-Methyl-pyrrolidone at 25°C.

### Component A)

As component A) a polysulfone having a MVR of 90 ml/10 minutes (360°C, 10 kg, ISO 1133) was usedd (Ultrason^{®} S 2010, commercially available from BASF SE).

### Component B)

As component B) a polycarbonate based on bisphenol A having a MVR of 12 ml/10 min (300°C, 1.2kg) was used (Makrolon 2605, commercially available from Covestro).

### Component C)

As component C) stearic acid was used (purity >98%), softening regime from 55 to 60°C. Commercially available from KLK Oleo.

### Component D

Carbon Black Printex EP, commercially available from Orion Engineered Carbons.

**Table 1:**

| | **C1** | **C2** | **3** | **4** | **C5** | **C6** | **7** |
|---|---|---|---|---|---|---|---|
| **component A [wt%]** | 60 | 59.9 | 59.8 | 59.5 | 58.75 | 59.5 | 59.3 |
| **component B [wt%]** | 40 | 40 | 40 | 40 | 40 | 40 | 40 |
| **component C [wt%]** | - | 0.1 | 0.2 | 0.5 | 1.25 | - | 0.2 |
| **component D [wt%]** | - | - | - | - | - | 0.5 | 0.5 |
| ISO 179 1eA [kJ/m²] | 8.7 | 8.2 | 7.6 | 7.2 | 6.84 | 7.6 | 9.7 |
| MVR [ml/10 min] 330°C; 2.16 kg | 19.1 | 19.3 | 21.2 | 24.6 | 29.1 | 18.7 | 21.0 |
| Surface Quality | 3 | 2.5 | 2 | 2 | 3.5 | 2.5 | 1.5 |

| **Yield-strength [MPa] after ageing** | | | | | | | |
|---|---|---|---|---|---|---|---|
| 0 h | 70.1 | 71.1 | 70.9 | 70.6 | 69.1 | 71.1 | 71.4 |
| 500 h | 76.1 | 77.1 | 76.6 | 77.0 | - | 75.6 | 76.0 |
| 1000 h | 78.2 | 77.9 | 77.0 | 77.1 | - | 77.1 | 77.5 |

| **Tensile elong. [%] after ageing** | | | | | | | |
|---|---|---|---|---|---|---|---|
| 0 h | 107 | 112 | 123 | 126 | 87 | 87 | 112 |
| 500 h | 21.7 | 34.2 | 33.2 | 35.2 | 4.2 | 8.9 | 42 |
| 1000 h | 12.3 | 15.3 | 27.2 | 26.7 | 3.9 | 7.8 | 33.2 |

C1, C2, C5 and C6 are comparative examples using no stearic acid or stearic acid amounts different from the invention. The compounds according to the invention show good mechanical performance and an improved combination of heat ageing stability and surface quality compared to the comparative examples.

## Claims

1. A composition comprising
A) 50 to 94 % by weight of at least one polyarylene(ether)sulfone;
B) 5 to 45 % by weight of at least one polycarbonate;
C) 0.15 to 1 % by weight of stearic acid; and
D) 0 to 40 % by weight of at least one additive;
wherein the sum of % by weight based on the composition is 100 % by weight.

2. The composition of claim 1, comprising 52 to 75 % by weight of component A).

3. The composition of claim 2, comprising 20 to 45 %by weight of component B).

4. The composition of any one of claims 1 to 3, comprising 0.1 to 10 % by weight of component D).

5. The composition of claim 4, wherein component D) is at least one pigment.

6. The composition of any one of claims 1 to 5, wherein the component A) is one kind of polyarylene(ether)sulfone.

7. The composition of any one of claims 1 to 6, wherein component A) is PPSU, PESU or PSU.

8. A use of the composition according to any one of claims 1 to 7 in the manufacture of a fiber, film or shaped article.

9. The use of claim 8 in the manufacture of an automotive part.

10. The use of claim 9, wherein the automotive part is a reflector, a lamp bezel or a mirror housing.

11. A fiber, film or shaped article comprising the composition according to any one of claims 1 to 7.

12. An automotive part comprising the composition according to any one of claims 1 to 7.

## Patentansprüche

1. Eine Zusammensetzung, umfassend
A) 50 bis 94 Gew.-% mindestens eines Polyarylen(ether)sulfons;
B) 5 bis 45 Gew.-% mindestens eines Polycarbonats;
C) 0,15 bis 1 Gew.-% Stearinsäure; und
D) 0 bis 40 Gew.-% mindestens eines Additivs;
wobei die Summe der Gew.-% bezogen auf die Zusammensetzung 100 Gew.-% beträgt.

2. Die Zusammensetzung nach Anspruch 1, umfassend 52 bis 75 Gew.-% der Komponente A).

3. Die Zusammensetzung nach Anspruch 2, umfassend 20 bis 45 Gew.-% der Komponente B).

4. Die Zusammensetzung nach einem der Ansprüche 1 bis 3, umfassend 0,1 bis 10 Gew.-% der Komponente D).

5. Die Zusammensetzung nach Anspruch 4, wobei Komponente D) mindestens ein Pigment ist.

6. Die Zusammensetzung nach einem der Ansprüche 1 bis 5, wobei die Komponente A) eine Art von Polyarylen(ether)sulfon ist.

7. Die Zusammensetzung nach einem der Ansprüche 1 bis 6, wobei Komponente A) PPSU, PESU oder PSU ist.

8. Eine Verwendung der Zusammensetzung nach einem der Ansprüche 1 bis 7 bei der Herstellung einer Faser, Folie oder eines Formkörpers.

9. Die Verwendung nach Anspruch 8 bei der Herstellung eines Kraftfahrzeugteils.

10. Die Verwendung nach Anspruch 9, wobei das Kraftfahrzeugteil ein Reflektor, eine Lampenblende oder ein Spiegelgehäuse ist.

11. Eine Faser, Folie oder ein Formkörper, umfassend die Zusammensetzung nach einem der Ansprüche 1 bis 7.

12. Ein Kraftfahrzeugteil, umfassend die Zusammensetzung nach einem der Ansprüche 1 bis 7.

## Revendications

1. Une composition comprenant
A) 50 à 94 % en poids d'au moins un poly(arylène)(éther)sulfone ;
B) 5 à 45 % en poids d'au moins un polycarbonate ;
C) 0,15 à 1 % en poids d'acide stéarique ; et
D) 0 à 40 % en poids d'au moins un additif ;
où la somme des % en poids par rapport à la composition est de 100 % en poids.

2. La composition de la revendication 1, comprenant 52 à 75 % en poids du composant A).

3. La composition de la revendication 2, comprenant 20 à 45 % en poids du composant B).

4. La composition de l'une quelconque des revendications 1 à 3, comprenant 0,1 à 10 % en poids du composant D).

5. La composition de la revendication 4, dans laquelle le composant D) est au moins un pigment.

6. La composition de l'une quelconque des revendications 1 à 5, dans laquelle le composant A) est un seul type de polyarylène(éther)sulfone.

7. La composition de l'une quelconque des revendications 1 à 6, dans laquelle le composant A) est du PPSU, du PESU ou du PSU.

8. Une utilisation de la composition selon l'une quelconque des revendications 1 à 7 dans la fabrication d'une fibre, d'un film ou d'un article moulé.

9. L'utilisation de la revendication 8 dans la fabrication d'une pièce automobile.

10. L'utilisation de la revendication 9, dans laquelle la pièce automobile est un réflecteur,
un enjoliveur de lampe ou un boîtier de rétroviseur.

11. Une fibre, un film ou un article moulé comprenant la composition selon l'une quelconque des revendications 1 à 7.

12. Une pièce automobile comprenant la composition selon l'une quelconque des revendications 1 à 7.
